# EUROPÄISCHE PATENTSCHRIFT

(11) **EP 0 832 385 B1**
(45) Veröffentlichungstag und Bekanntmachung des Hinweises auf die Patenterteilung: **13.11.2002**
(21) Anmeldenummer: 97908270.8
(22) Anmeldetag: 20.03.1997
(51) Int. Cl.: F16J 15/32

(54) **BÜRSTENDICHTUNG MIT EINEM VON BORSTENBÜNDELN UMSCHLUNGENEN KERNRING**
BRUSH SEAL WITH A CORE RING EMBRACED BY BRISTLE BUNDLES
JOINT A BROSSE A ANNEAU CENTRAL ENTOURE DE FAISCEAUX DE POILS

(30) Priorität: 04.04.1996 DE 19613510
(43) Veröffentlichungstag der Anmeldung: 01.04.1998
(73) Patentinhaber: MTU Aero Engines GmbH, 80995 München (DE)
(72) Erfinder: MAYR, Alfred, D-85244 Röhrmoos (DE)
(74) Vertreter: Einsele, Rolf W.
(86) Internationale Anmeldenummer: EP9701399
(87) Internationale Veröffentlichungsnummer: WO97038247

(56) Entgegenhaltungen:
- EP-A- 0 192 477
- EP-A- 0 211 275
- DE-A- 3 907 614
- FR-A- 2 650 048
- US-A- 4 227 745
- US-A- 5 110 033

## Beschreibung

Die Erfindung betrifft eine Bürstendichtung zur Abdichtung eines ringförmigen Spaltes zwischen einer Rotor-Stator-Anordnung nach dem Oberbegriff des Patentanspruches 1. Eine solche Bürstendichtung ist in der DE-OS 39 07 614 offenbart. Desweiteren betrifft die Erfindung ein Verfahren zum Herstellen einer solchen Bürstendichtung.

Derartige in einem Statorgehäuse angeordnete Bürstendichtungen umgeben einen Rotor konzentrisch, wobei die dicht aneinanderliegenden Borsten zur Radialen winklig angestellt sind und den Rotor mit ihren Enden am Umfang berühren oder kurz zuvor enden, so daß sie eine Abdichtung zwischen unterschiedlich druckbeaufschlagten Räumen beiderseits der Dichtung unter allen Betriebsbedingungen ermöglichen. Aufgrund der winkeligen Anstellung der Borsten zum Rotor und ihrer Elastizität sind die Borsten in der Lage, auch Rotor- bzw. Wellenexzentritäten und Rotorunwuchten zu kompensieren, indem sie ausbiegen. Bei Borstendichtungen nach den Merkmalen der DE-OS 39 07 614, bei der die Borsten einen rotorkonzentrischen Klemmring umschlingen und von einem C-förmigen Klemmring umfaßt werden, ist eine schräge Ausrichtung der Borsten zum Rotor insbesondere bei größeren Winkeln nicht möglich bzw. die Borsten werden während des Betriebes keinen definierten Schrägstellungswinkel einhalten können. Auch scheidet eine kräftigere Klemmung der Borsten, insbesondere bei keramischen Fasern aus, da die hohe Kantenpressung zu einem frühzeitigen Verschleiß oder Bruch der Borsten führt. Dies gilt insbesondere im Hinblick auf die gewünschte Verwendung hochfeiner bzw. extrem dünner Borsten.

Hiervon ausgehend, liegt der Erfindung die Aufgabe zugrunde, eine gattungsgemäße Bürstendichtung anzugeben, die eine Schrägstellung der Borsten gegenüber dem Rotor erlaubt, und die Funktionstüchtigkeit der Bürstendichtung unter Beibehaltung des Anstellwinkels der Borsten im gesamten Betriebsbereich gewährleistet. Desweiteren ist ein Verfahren zur einfachen Herstellbarkeit des Kernrings einer solchen Bürstendichtung anzugeben.

Erfindungsgemäß wird die Aufgabe bezüglich der Bürstendichtung durch die im kennzeichnenden Teil angegebenen Merkmale des Patentanspruches 1 gelöst.

Die Erfindung hat den Vorteil, daß durch die Verwendung schräg gestellter Trennscheiben im Innenraum des Klemmrings die Borstenbündel zwangsweise in einem Winkel β gegen den Rotorumfang ausgerichtet werden ohne daß es hierbei extremer Klemmkraft bei der Einfassung der Borstenbündel bedarf. Durch Einsatz einer Vielzahl im Teilungswinkel α voneinander beabstandeter Trennscheiben wird ein gleichbleibender Schrägstellungswinkel über den gesamten Umfang der Bürstendichtungen hinweg sichergestellt. Die so von den Trennscheiben ausgerichteten Borstenbündel umschlingen jeweils einen zwischen den Trennscheiben gelegenen Wickelsteg, welcher auch benachbarte Trennscheiben miteinander verbindet. Zusammen mit der durch den Klemmring ausgeübten Klemmkraft gelingt es, die Borstenbündel sicher mit der vorbestimmten Winkelrichtung festzulegen.

Weitere vorteilhafte Ausführungsformen der Erfindung bezüglich der Bürstendichtung gehen aus den Merkmalen der Patentansprüche 2 bis 8 hervor.

Die Aufgabe bezüglich des Verfahrens wird erfindungsgemäß durch die im kennzeichnenden Teil angegebenen Merkmale des Patentanspruches 9 gelöst.

Die Erfindung hat den Vorteil, daß durch die Verwendung eines geraden Rohlinges, z.B. eines Drahtes, der Kernring, bestehend aus wechselweise angeordneten Trennscheiben und Wickelstegen, in wirtschaftlicher Weise mittels Sägen oder Fräsen hergestellt werden kann. Bei Verwendung eines Scheibenfräsers, dessen Scheibendicke dem Abstand zwischen zwei benachbarten Trennscheiben entspricht fräst dieser bei einem Durchgang in einer kreisförmigen Bewegung um den Draht Umfangsnuten in denselben, so daß zwischen zwei benachbarten Trennscheiben ein Wickelsteg des gewünschten Durchmessers verbleibt. Durch Schrägstellung der Frässcheibenachse gegenüber der Längsachse des Drahtes im Winkel, welcher dem Schrägstellungswinkel der Trennscheiben gegenüber der Radialen entspricht, ergibt sich die schräg verlaufende Ausrichtung der Trennscheiben gegenüber der Achse des Kernringes sowie die ellipsenförmige Gestalt der Trennscheiben.

In mehreren Durchgängen, bei denen der Draht jeweils um den konstant bleibenden Teilungsabstand zwischen den Trennscheiben in der Einspannung weitergeschoben wird, werden nach und nach die Trennscheiben mit den Wickelstegen aus dem Draht herausgeschnitten. Ist der Draht über seine gesamte Länge hinweg bearbeitet, so wird er zu einem Kernring gebogen und verbunden. Der fertig bearbeitete Kernring kann dann mit den Borsten versehen werden und in den Klemmring eingesetzt werden. Anschließend erfolgt die Fertigbearbeitung zu einer Bürstendichtung.

Eine bevorzugte Ausführungsform der Erfindung wird nachfolgend unter Bezugnahme auf die beigefügte Zeichnung erläutert. Es zeigen:
- Fig. 1: einen ausschnittsweisen Schnitt quer zur Rotorachse einer Rotor-Stator-Anordnung, bei der zwei Borstenbündel exemplarisch in angewinkelter Darstellung zu sehen sind,
- Fig. 2: einen Querschnitt durch eine Bürstendichtung und
- Fig. 3: eine schematische Darstellung einer Einspannvorrichtung mit Draht bei der Herstellung eines Kernringes.

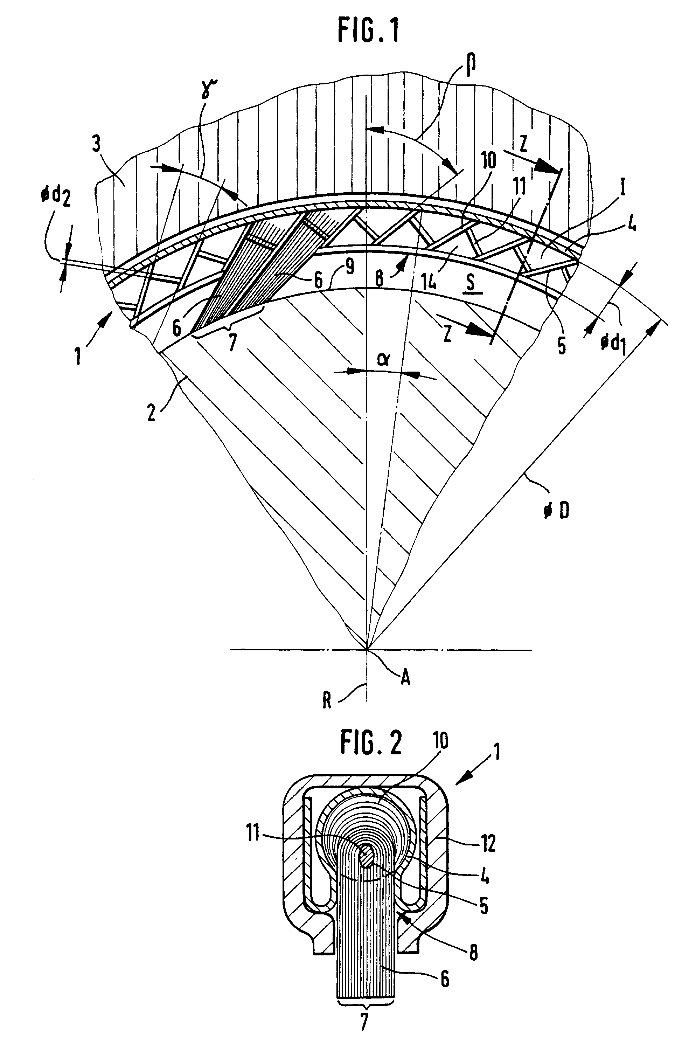

Fig. 1 zeigt eine Bürstendichtung 1 für eine nicht weiter dargestellte Strömungsmaschine, die konzentrisch zwischen einem Rotor 2 und einem Stator 3 ausgebildet ist und zwar zur Abdichtung zwischen zwei unterschiedlich druckbeaufschlagten Räumen. Zur Aufnahme der zahlreichen Borstenbündel 6 weist die Bürstendichtung 1 einen Klemmring 4 mit torusförmigen Innenraum I sowie einen ebenfalls rotorkonzentrisch angeordneten Kernring 5 auf, welcher innerhalb des Klemmringes 4 angeordnet ist.

Wie auch in Fig. 2 zu erkennen ist, ragen die freien Enden 7 der Borstenbündel 6 aus einem Umfangsschlitz 8, welcher den Klemmring 4 nach radial innen hin öffnet heraus, Die freien Enden 7 liegen auf einer Dichtfläche 9, die den Rotor 2 umgibt auf, und dichten so den Spalt S zwischen Rotor 2 und Stator 3 ab.

Wie weiter in Fig. 1 zu erkennen, sind die Borstenbündel 6 um den Winkel β gleich 45 ° gegenüber einer Radialen R schräg angestellt. Die so schräg auf der Dichtfläche 9 anliegenden Enden 7 ergeben eine bessere Dichtwirkung des Gesamtsystems gegenüber exakt radial ausgerichteten Borsten.

Wie wiederum in Fig. 2 zu erkennen, sind die Borstenbündel 6 vom Kernring 5 gehalten und vom Klemmring 4 umfaßt. Hierzu setzt sich der Kernring 5 aus wechselweise aufeinanderfolgenden elliptischen Trennscheiben 10 und kreiszylinderförmigen Wickelstegen 11 zusammen. Die im Teilungswinkel γ voneinander beabstandeten Trennscheiben 10 sind entsprechend der Ausrichtung der Borstenbündel 6 um den Winkel α = 45 ° gegenüber der Rotorachse A schräg angestellt, so daß sie die Borstenbündel 6 mit der gewünschten Ausrichtung fixieren. Auch die Wickelstege 11, welche benachbarte Trennscheiben 10 miteinander verbinden, sind um den Winkel α = 45 ° gegenüber der tangentialen Ausrichtung schräg gestellt um jeweils von einem Borstenbündel 6 umschlungen zu werden. Dadurch daß sich alle Borsten in einer Schlinge um einen Wickelsteg 11 legen, ist gewährleistet, daß alle Borsten gleichsam gegen Herausziehen aus dem Klemmring 4 gesichert sind.

Die in Fig. 2 gezeigte Bürstendichtung 1 weist ein geschweißtes Dichtungsgehäuse 12 auf, welches den Klemmring 4 umschließt um sich nach radial innen zur Freigabe der Borstenbündel 6 in einem Umfangsschlitz 8 öffnet. Eine derart eingehäuste Bürstendichtung 1 kann nun in eine Rotor-Stator-Anordnung eingesetzt werden.

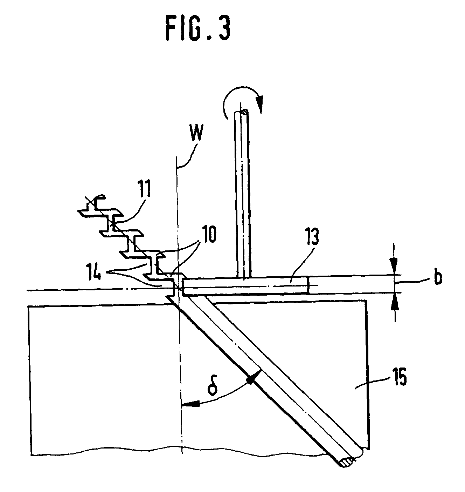

Fig. 3 zeigt einen Arbeitsschritt bei der Herstellung des Kernringes 5 mit seinen H-förmigen Winkelabschnitten mittels eines Scheibenfräsers 13. Als Rohling für den Kernring 5 wird ein geradliniger Draht von 4mm Durchmesser verwendet und zum Fräsen der Umfangsnuten 14 in eine Spannvorrichtung 15 unter einem Winkel δ von 45 ° zu einer Arbeitsebene eingespannt. Dieser Einspannwinkel δ ergibt sich aus dem gewünschten Schrägstellungswinkel β der Borstenbündel bzw. der Trennscheiben 10. Mittels des Scheibenfräsers 13 dessen Scheibendicke b der Umfangsnut 14 bzw. dem Abstand zwischen benachbarten Trennscheiben 10 entspricht, werden nach und nach die Umfangsnuten 14 in den Draht geschnitten. Hierzu führt der Scheibenfräser 13 eine kreisförmige Bewegung um eine Achse aus, die mit der Symmetrieachse W des herauszuschneidenden Wickelsteges 11 identisch ist.

Nach einem Umlauf des Scheibenfräsers 13 um die Symmetrieachse W ist die schräg gestellte Umfangsnut 14 geschnitten und es verbleibt der zylindrische Wickelsteg 11. Um die nächste Umfangsnut aus dem Draht herausschneiden zu können, wird dieser um ein Stück, welches der bogenförmigen Beabstandung der Trennscheiben 10 entspricht, aus der Spannvorrichtung 15 herausgeschoben und der Draht emeut gespannt.

Dieser Arbeitsschritt wird so häufig wiederholt, bis die gewünschte Länge des Drahtes mit Umfangsnuten 14 versehen ist. Abschließend wird der Draht zu einem Kernring 5 gebogen und die Enden miteinander verbunden.

## Patentansprüche

1. Bürstendichtung zur Abdichtung eines ringförmigen Spaltes (S) zwischen einer Rotor-Stator-Anordnung (2,3) mit einem rotorkonzentrischen Klemmring (4), dessen torusförmiger Innenraum (I) Borstenbündel (6) aufnimmt, die mit ihren Enden (7) aus einem Umfangsschlitz (8) des Klemmringes (4) heraus, zum Spalt (S) ragen, wobei die Bündel (6) einen im Innenraum (I) sich erstreckenden Kernring (5) umschlingen, **dadurch gekennzeichnet, daß** der Kernring (5) von in Umfangsrichtung durch einen Teilungswinkel (α) voneinander beabstandete Trennscheiben (10) und von Wickelstegen (11), die von den Bündeln (6) umschlungen werden, gebildet wird, wobei in wechselnder Folge die Wickelstege (11) benachbarte Trennscheiben (10) derart verbinden, daß durch Schrägstellung der Trennscheiben (10) in Umfangsrichtung die Bündel (6) in einem Winkel (β) gegen die Radialen (R) ausgerichtet sind.

2. Bürstendichtung nach Anspruch 1, **dadurch gekennzeichnet, daß** der Winkel (γ) zwischen benachbarten Trennscheiben (10) dem Teilungswinkel (α) entspricht.

3. Bürstendichtung nach Anspruch 1 oder 2, **dadurch gekennzeichnet, daß** die Trennscheiben (10) zur Aufnahme des Klemmrings (4) in dem torusförmigen Innenraum (I) einen entsprechenden Außendurchmesser (d₁) aufweisen.

4. Bürstendichtung nach einem der vorhergehenden Ansprüche, **dadurch gekennzeichnet, daß** die Trennscheiben (10) elliptisch ausgebildet sind.

5. Bürstendichtung nach einem der vorhergehenden Ansprüche, **dadurch gekennzeichnet, daß** die Wickelstege (11) kreiszylindrisch ausgebildet sind.

6. Bürstendichtung nach einem der vorhergehenden Ansprüche, **dadurch gekennzeichnet, daß** der Teilungswinkel (α) kleiner oder gleich 10° ist.

7. Bürstendichtung nach einem der vorhergehenden Ansprüche, **dadurch gekennzeichnet, daß** der Werkstoff der Borsten ein Siliziumkarbid ist.

8. Bürstendichtung nach einem der vorhergehenden Ansprüche, **dadurch gekennzeichnet, daß** benachbarte Trennscheiben (10) und Winkelstege (11) in Umfangsrichtung folgende, H- oder N-förmige Winkelabschnitte des Kernrings (5) bilden.

9. Verfahren zum Herstellen eines Kernrings einer Bürstendichtung nach einem der vorhergehenden Ansprüche, **gekennzeichnet durch** folgende Verfahrensschritte:
- Ablängen eines Drahtes mit einem dem des Innenraums (I) des Klemmrings (4) entsprechenden Durchmesser (d₁) zumindest auf die Umfangslänge des Innenraums,
- Einspannen des Drahtes,
- Sägen oder Fräsen von Umfangsnuten (14), die gegenüber der Längsachse des Drahtes, etwa im Winkel (δ) schräg gestellt sind und in Längsachsenrichtung entsprechend des Teilungswinkels (α) voneinander beabstandet sind und
- Biegen und Verbinden des Drahtes zu einem Kernring (5).

## Claims

1. Brush sealing for sealing an annular gap (G) between a rotor-and-stator arrangement (2, 3) with a clamping ring (4), which is concentric with the rotor, the toroidal inner space (I) of the said clamping ring (4) taking up bristle bundles (6) which, with their ends (7), project from a peripheral slot (8) in the clamping ring (4) and into the gap (G), whereby the bundles (6) wrap around a core ring (5) extending in the inner space (I), **characterized in that** the core ring (5) is formed from separator disks (10), that are separated from each other by a pitch angle (α), and wrapping stems (11), which are wrapped around by the bundles (6), whereby the wrapping stems (11) connect adjacent separator disks (10) in an alternating succession, such that, through inclined positioning, the separator disks (10) are aligned at an angle (β) in relation to radial lines (R), in the peripheral direction of the bundles (6).

2. Brush sealing in accordance with claim 1, **characterized in that** the angle (γ) between adjacent separator disks (10) corresponds to the pitch angle (α).

3. Brush sealing in accordance with claim 1 or 2, **characterized in that** the separator disks (10), for taking up the clamping ring (4) in the toroidal inner space (I), have a corresponding external diameter (d₁).

4. Brush sealing in accordance with one of the preceding claims, **characterized in that** the separator disks (10) are elliptical.

5. Brush sealing in accordance with one of the preceding claims, **characterized in that** the wrapping stems (11) are cylindrical.

6. Brush sealing in accordance with one of the preceding claims, **characterized in that** the pitch angle (α) is less than, or equal to, 10°.

7. Brush sealing in accordance with one of the preceding claims, **characterized in that** the bristles are made of silicon carbide.

8. Brush sealing in accordance with one of the preceding claims, **characterized in that** adjacent separator disks (10) and angle stems (11) form, in the peripheral direction, successive H or N-shaped angle sections of the core ring (5).

9. Process for producing a core ring of brush sealing in accordance with one of the preceding claims, **characterized by** the following process stages:
- cutting of a wire, having, at least over the peripheral length of the inner space, a diameter (d₁) corresponding to the inner space (I) of the clamping ring (4), to length,
- insertion of the wire,
- sawing or milling of peripheral grooves (14) that are inclined approximately at an angle (δ) in relation to the longitudinal axis of the wire and are separated from each other, in the direction of the longitudinal axis, in accordance with the pitch angle (α),
- bending and connection of the wire to form a core ring (5).

## Revendications

1. Joint à brosse pour l'étanchéité d'un jeu annulaire (S) entre une disposition rotor-stator (2, 3), comportant un anneau de serrage (4), concentrique au rotor, dont l'espace intérieur en forme de tore (I) reçoit des faisceaux de poils (6) qui, à partir d'une fente périphérique (8) de l'anneau de serrage (4), pénètrent, par leurs extrémités (7), vers le jeu (S), les faisceaux (6) enlaçant un anneau central (5) qui s'étend dans l'espace intérieur (I) **caractérisé par le fait que** l'anneau central (5) est formé de disques séparateurs (10) situés à distance l'un de l'autre d'un angle de division (α) selon la direction circonférentielle et de bobineaux (11) qui sont enlacés par les faisceaux (6), étant précisé que, selon une succession alternée, les bobineaux (11) relient les disques séparateurs voisins (10) de façon que, du fait de la position inclinée des disques séparateurs (10) selon la direction circonférentielle, les faisceaux (6) sont orientés sous un angle (β) par rapport aux rayons (R).

2. Joint à brosse selon la revendication 1, **caractérisé par le fait que** l'angle (γ) entre des disques séparateurs voisins (10) correspond à l'angle de division (α).

3. Joint à brosse selon la revendication 1 ou 2, **caractérisé par le fait que**, pour recevoir l'anneau de serrage (4) dans l'espace intérieur (I) en forme de tore, les disques séparateurs (10) présentent un diamètre extérieur approprié (d₁).

4. Joint à brosse selon l'une des revendications précédentes, **caractérisé par le fait que** les disques séparateurs (10) sont de forme elliptique.

5. Joint à brosse selon l'une des revendications précédentes, **caractérisé par le fait que** les bobineaux (11) sont en forme de cylindre circulaire.

6. Joint à brosse selon l'une des revendications précédentes, **caractérisé par le fait que** l'angle de division (α) est inférieur ou égal à 10°.

7. Joint à brosse selon l'une des revendications précédentes, **caractérisé par le fait que** le matériau des poils est un carbure de silicium.

8. Joint à brosse selon l'une des revendications précédentes, **caractérisé par le fait que** des disques séparateurs (10) et bobineaux (11) voisins forment des tronçons bobinés, en forme de H ou de N, de l'anneau central (5) qui se suivent selon la direction circonférentielle.

9. Procédé de fabrication d'un anneau central d'un joint à brosse selon l'une des revendications précédentes, **caractérisé par** les pas de procédé suivants :
- mise à longueur, au moins à la longueur circonférentielle de l'espace intérieur (I) de l'anneau de serrage (4), d'un fil d'un diamètre (d₁) correspondant à celui de cet espace intérieur,
- mise du fil sous tension,
- sciage ou fraisage de rainures périphériques (14) qui sont un peu inclinées, d'un angle (δ), par rapport à l'axe longitudinal du fil et sont, selon la direction de l'axe longitudinal, à une distance l'une de l'autre correspondant à l'angle de division (α), et
- cintrage et fermeture du fil sur lui-même pour former un anneau central (5).
